**Europäisches Patentamt**

**European Patent Office**

**Office européen des brevets**

(19)

(11) Veröffentlichungsnummer : **0 342 521 B1**

(12)

# EUROPÄISCHE PATENTSCHRIFT

(45) Veröffentlichungstag der Patentschrift :
02.09.92 Patentblatt 92/36

(51) Int. Cl.$^5$ : **C01B 7/07**

(21) Anmeldenummer : **89108474.1**

(22) Anmeldetag : **11.05.89**

(54) **Verfahren zur Reinigung von rohem, gasförmigem Chlorwasserstoff.**

(30) Priorität : **17.05.88 DE 3816783**

(43) Veröffentlichungstag der Anmeldung :
**23.11.89 Patentblatt 89/47**

(45) Bekanntmachung des Hinweises auf die
Patenterteilung :
**02.09.92 Patentblatt 92/36**

(84) Benannte Vertragsstaaten :
**DE ES FR GB IT NL**

(56) Entgegenhaltungen :
**FR-A- 1 417 388**
**FR-A- 2 151 107**

(73) Patentinhaber : **WACKER-CHEMIE GMBH**
**Hanns-Seidel-Platz 4**
**W-8000 München 83 (DE)**

(72) Erfinder : **Schneider, Otto, Dr.**
**Stegerwaldstrasse 5**
**W-8263 Burghausen (DE)**
Erfinder : **Lindner, Tassilo, Dr.**
**Neuhauserstrasse 10**
**W-8261 Mehring-Öd (DE)**
Erfinder : **Hilgert, Wilhelm, Dr.**
**Hermann-Hiller-Strasse 47**
**W-8263 Burghausen (DE)**

EP 0 342 521 B1

**Beschreibung**

Der großtechnisch beispielsweise bei Chlorierungsreaktionen als Nebenprodukt anfallende Chlorwasserstoff enthält üblicherweise Verunreinigungen, die bei der Wiederverwendung stören. Für die Reinigung von Chlorwasserstoff sind daher zahlreiche Maßnahmen bekannt, die je nach Art und Menge der Verunreinigungen einzeln oder kombiniert angewendet werden können (vgl."Ullmanns Enzyklopädie der technischen Chemie", Band 20, 4. Auflage, 1981, Seite 369 ff.).

So kann beispielsweise gasförmiger Chlorwasserstoff, der als Verunreinigungen Wasser und organische und/oder anorganische Stoffe, wie Chlor, Chlorkohlenwasserstoffe, Metallhalogenide und Fluorwasserstoff enthält, durch Kombination verschiedener Maßnahmen gereinigt werden (vgl. DE-A 14 67 074). Hierbei wird das auf bis zu 0,4 MPa komprimierte Rohgas durch Gegenstromkontakt mit einem flüssigen Kühlmedium auf etwa -10°C abgekühlt und Wasser und ein Teil der Verunreinigungen, die unter diesen Bedingungen kondensierbar sind, entfernt. Dann wird das praktisch wasserfreie Rohgas auf bis zu 3 MPa komprimiert und anschließend unter Druck in einer Fraktionierkolonne im Gegenstrom mit flüssigem Chlorwasserstoff unter Rückfluß in Kontakt gebracht. Dabei werden Verunreinigungen mit höherem Siedepunkt als Chlorwasserstoff im unteren Teil der Kolonne entfernt und gereinigter Chlorwasserstoff am oberen Ende der Kolonne abgezogen. Für die erste Verdichtungsstufe werden Kompressoren mit konzentrierter Schwefelsäure als Sperrflüssigkeit empfohlen, die gleichzeitig als Trockenmittel wirkt und dazu beiträgt noch vorhandene Wasserspuren aus dem Rohgas zu entfernen. Für die zweite Verdichtungsstufe können Kompressoren beliebiger Bauart mit zwei oder mehr Stufen und Zwischenkühlung verwendet werden. Da das Rohgas praktisch wasserfrei ist, können sowohl für die zweite Verdichtungsstufe, als auch für die Druckdestillation Stahlapparaturen verwendet werden, die bei Einhaltung der angegebenen Temperaturbedingungen von korrosiven Angriffen weitgehend verschont bleiben.

Gasförmiger Chlorwasserstoff, der als Verunreinigungen flüchtige Kohlenstoffverbindungen, wie Kohlenwasserstoffe, Chlorkohlenwasserstoffe und von Carbonsäuren abgeleitete Säurechloride, wie Phosgen, enthält, kann ohne Vorbehandlung direkt als Rohgas verdichtet und anschließend destilliert werden mit einer dazwischen geschalteten Tieftemperaturkondensationsstufe (vgl. DE-A 21 43 994). Hier werden für die Verdichtung zwei- oder dreistufige Schraubenverdichter und als Konstruktionswerkstoffe Stahl vorgeschlagen.

Die Reinigung von Chlorwasserstoff, der in Silan oder Siloxan produzierenden Betrieben anfällt und der Silane, wie Chlorsilane, Alkoxysilane oder Alkohole als Verunreinigungen enthält, erfolgt im allgemeinen durch Auswaschen des Gasgemisches mit einer Waschflüssigkeit, wie Wasser (vgl. DE-B 11 85 593), Salzsäure (vgl. EP-A 114 226 und DE-A 35 33 577) oder Schwefelsäure (vgl. DD-A 227 685). Die dabei als Nebenprodukte anfallenden mehr oder weniger verdünnten Säuren müssen dann durch zusätzliche Maßnahmen aufkonzentriert oder anderweitig entsorgt werden, da deren Wiederverwendung für Synthesezwecke eng begrenzt ist.

Da üblicherweise in einem chemischen Großbetrieb Chlorwasserstoff enthaltende Rohgase aus verschiedenen Synthesebereichen und damit unterschiedlichen Verunreinigungen anfallen, ist es aus wirtschaftlichen und aus Umweltschutzgründen sinnvoll, dafür ein gemeinsames Reinigungs- bzw. Wiederaufbereitungsverfahren zu finden.

Roher, gasförmiger Chlorwasserstoff fällt beispielsweise in Silan produzierenden oder verarbeitenden Betrieben an, wie der Herstellung von Phenyl- oder Phenylmethylgruppen aufweisenden Silanen durch Umsetzung von H-Silanen mit Chlorbenzol, der Herstellung von Tetraethylsilicat durch Umsetzung von Siliciumtetrachlorid mit Ethanol, der Herstellung von Organoalkoxysilanen durch Umsetzung von Organochlorsilanen mit Alkanolen, wie Methanol und Ethanol, wobei als Nebenprodukt das entsprechende Alkylchlorid entsteht und der Herstellung von Organoacyloxysilanen durch Umsetzung von Chlorsilanen mit Carbonsäuren, wie Essigsäure, wobei als Nebenprodukt das entsprechende Acylchlorid, wie Acetylchlorid und Acetanhydrid entsteht.

Die anfallenden Rohgase enthalten daher neben den Ausgangsund Endprodukten der jeweiligen Umsetzung auch die dabei gebildeten Nebenprodukte, sowie Wasser und gegebenenfalls organische Lösungsmittel, sofern diese mitverwendet worden sind, wie Ethylacetat, Aceton, Toluol und Xylol, um nur die wichtigsten zu nennen.

Die Art der möglichen Verunreinigungen im Rohgas kann an folgenden Beispielen näher erläutert werden: Bei der Herstellung von Metyltriethoxysilan durch Umsetzung von Methyltrichlorsilan mit Ethanol gemäß der Gleichung

$$MeSiCl_3 + 3\ EtOH \rightarrow MeSi(OEt)_3 + 3\ HCl \qquad (1)$$

enthält das entweichende Chlorwasserstoffrohgas neben den Ausgangsprodukten und dem Endprodukt noch Kohlenwasserstofffe, die als Vergällungsmittel im Ethanol vorhanden sind (ca. 2 %) und Ethylchlorid, das in einer Nebenreaktion gemäß der Gleichung

$$EtOH + HCl \rightarrow EtCl + H_2O \qquad (2)$$

gebildet wird.

2

Außerdem sind gemischte Chlorethoxysilane vorhanden, die mit überschüssigem Chlorwasserstoff unter Freisetzung von Ethanol reagieren können gemäß der Gleichung

$$MeSiCl_{3-x}(OEt)_x + y\ HCl \rightleftharpoons MeSiCl_{3-x+y}(OET)_{x-y} + y\ EtOH \qquad (3)$$
$$(x = 0, 1, 2, 3\ und\ y < x)$$

und das gemäß Gleichung (2) gebildete Reaktionswasser kann unter HCl-Katalyse mit den gemischten Chlorethoxysilanen gelartige Metylkieselsäuren bilden gemäß der Gleichung

$$n.MeSiCl_{3-x}(OEt)_x + n.1,5\ H_2O \rightarrow (MeSiO_{1,5})_n + n.(3-x)HCl + n.x\ EtOH. \qquad (4)$$

Somit stellt sich die Aufgabe, ein Verfahren zur Reinigung von rohem, gasförmigem Chlorwasserstoff der als Verunreinigungen Chlor- und/oder organische Reste aufweisende Silane, Wasser, Alkanole, Kohlenwasserstoffe, Chlorkohlenwasserstoffe, organische Säuren und deren Derivate enthält, durch Kombination der Maßnahmen Kondensation, Verdichtung und fraktionierte Destillation zur Verfügung zu stellen.

Diese Aufgabe wird erfindungsgemäß dadurch gelöst, daß (1) das Rohgas durch einen Wärmetauscher geleitet, dabei auf -15°C bis -35°C abgekühlt, (2) anschließend das von den kondensierbaren Produkten mindestens teilweise befreite Rohgas auf 0°C bis +40°C erwärmt, in einem Schraubenverdichter mit Öleinspritzung auf einen Druck von 0,6 bis 1,5 MPa verdichtet, der Chlorwasserstoff durch einen Abscheider mit Filter vom Öl abgetrennt, das abgetrennte Öl in einem Wärmetauscher gekühlt, durch ein Filtervlies von Rückständen befreit, und in den Verdichter zurückgeführt wird, (3) anschließend der vom Öl abgetrennte verdichtete Chlorwasserstoff in einer Destillationskolonne unter Druck fraktioniert und am Kopf der Kolonne der gereinigte Chlorwasserstoff abgezogen wird.

Bei der Durchführung des erfindungsgemäßen Reinigungsverfahrens wird das Chlorwasserstoff enthaltende Rohgas in einer 1. Verfahrensstufe einer Tieftemperaturkondensation unterzogen. Dazu wird das Rohgas, das üblicherweise mit einer Temperatur von über -15°C und einem Druck von 0,08 bis 0,15 MPa anfällt, durch einen korrosionsbeständigen Wärmetauscher geleitet und dabei auf -15°C bis -35°C, vorzugsweise auf -25°C bis -35°C abgekühlt. Die in diesem Temperaturbereich verflüssigten Anteile, insbesondere Wasser und Alkanole, neben Silanen, Kohlenwasserstoffen und Chlorkohlenwasserstoffen werden gesammelt und ausgeschleust. Das von diesen Produkten somit mindestens teilweise befreite Rohgas verläßt den Wärmetauscher.

Nach dem Verlassen des Wärmetauschers wird das vorgereinigte Rohgas auf ca. 0°C bis +40°C, vorteilhaft auf etwa Umgebungstemperatur (z.B. +10°C bis +25°C) erwärmt und in den Verdichter eingeleitet.

Als Verdichter haben sich insbesondere Kompressoren vom Typ der einstufigen Schraubenverdichter mit Öleinspritzung bewährt, die einen maximalen Verdichtungsdruck von bis zu 2,0 MPa, vorzugsweise von mindestens 0,6 bis 1,5 MPa und insbesondere von 0,8 bis 1,2 MPa bei einstufiger Verdichtung erreichen lassen. Für die Lagerung der beiden horizontalen Rotoren sind Lager aus Kohlenstoffstahl eingesetzt. Unter Kohlenstoffstahl ist ein unlegierter Stahl zu verstehen, der abgesehen von zulässigen Beimengungen außer Kohlenstoff keine besonderen Legierungszusätze enthält.

Gemeinsam mit dem verdichteten Gas verläßt das Öl mit einer Temperatur von etwa 60°C bis 110°C den Verdichter, wird in einem Abscheider vom Gasstrom getrennt, in einem anschliessenden Wärmetauscher gekühlt, nachfolgend durch ein Filtervlies von Rückständen befreit und z.B. auf die Saugseite in den Verdichter zurückgeführt.

Für die Ölschmierung im Schraubenverdichter haben sich additivfreie synthetische Kohlenwasserstoffe auf Polyolefinbasis besonders bewährt. Als Filtervliese zum Entfernen von insbesondere gelartigen Rückständen, die beispielsweise gemäß Gleichung (4) gebildete, gelartige Alkylkieselsäuren sein können, haben sich solche aus polymerem organischem Material bewährt, wie Filtervliese aus Polypropylen mit einer Feinheit von 10 µm.

Das verdichtete Gas wird durch einen zweiten Abscheider mit Filter, vorzugsweise einem Keramikfilter, von Restölanteilen befreit, und dann in einer Druckdestillationskolonne fraktioniert.

Mit Hilfe des erfindungsgemäßen Reinigungsverfahrens können aus Chlorwasserstoff enthaltendem Rohgas unterschiedlicher Herkunft praktisch alle Verunreinigungen, die bei Normaldruck (0,1013 MPa) einen Siedepunkt von -35°C bis +200°C, insbesondere solche mit einem Siedepunkt von 0°C bis +150°C entfernt werden.

**Beispiel:**

38 kg/h eines Chlorwasserstoff enthaltenden Rohgases, das bei der Herstellung von Methyltrimethoxysilan aus Methyltrichlorsilan und Methanol mit einem Gesamtgehalt an Verunreinigungen von 3,4 Gew.-% anfiel, wurden mit einer Temperatur von 20°C und einem Druck von 0,11 MPa durch einen Rohrbündelwärmetauscher geleitet und dabei auf -35°C abgekühlt. Das gebildete Kondensat wurde gesammelt und ausgeschleust. Nach dem Verlassen des Wärmetauschers wurde das vom Kondensat befreite Rohgas auf +18°C erwärmt und mit

leichtem Überdruck (0,10 MPa abs.) in den Verdichter eingeleitet.

Als Verdichter wurde ein einstufiger Schraubenverdichter mit Öleinspritzung (additivfreie synthetische Kohlenwasserstoffe unter der geschützten Bezeichnung SHF Base Stock Oil der Fa. Mobil Oil im Handel) verwendet. Das Gas/Öl-Gemisch hatte nach der Kompression eine Temperatur von +89°C. Das Öl wurde in einem Abscheider vom Gasstrom abgetrennt, in einem anschliessenden Wärmetauscher (Austauschfläche 1 m²) gekühlt, dann über ein Filtervlies aus Polypropylen mit einer Feinheit von 10 μ m (Filterfläche 0,17 m²) gefiltert und mit einer Temperatur von 62°C auf der Saugseite in den Verdichter zurückgeführt. Der Verdichter zeigte nach einer Betriebsdauer von mehr als 4000 h keine Korrosionsschäden.

Das verdichtete Gas wurde durch einen zweiten Abscheider mit Keramikfilter von Restölanteilen befreit und mit einer Temperatur von 87°C unter einem Druck von 1,15 MPa in eine Druckdestillationskolonne eingeleitet. Als Kolonne wurde eine Füllkörperkolonne mit einer Höhe von 5 m und einem Durchmesser von 100 mm verwendet. Als Füllkörper wurden Berl-Sättel aus Keramik verwendet; die Höhe der Füllkörperschicht betrug 3,5 m.

Bei einem Zulauf von 38 kg/h des komprimierten Rohgases direkt über den Kolonnensumpf betrug der Rücklauf 76 kg/h (HCl flüssig am Kolonnenkopf) entsprechend einem Rücklaufverhältnis von 2:1; der Druck in der Kolonne betrug 1,15 MPa (abs.), die Temperatur am Kolonnenkopf -35° und im Kolonnensumpf ca. +70°C. Der am Kolonnenkopf flüssig abgezogene Chlorwasserstoff hatte eine Reinheit von 99,999 %, das entspricht weniger als 10 ppm Verunreinigungen insgesamt.

## Patentansprüche

1. Verfahren zur Reinigung von rohem, gasförmigem Chlorwasserstoff, der als Verunreinigungen Chlor- und/oder organische Reste aufweisende Silane, Alkanole, Wasser, Chlorkohlenwasserstoffe, Kohlenwasserstoffe, organische Säuren und deren Derivate enthält, durch Kondensation, Verdichtung und fraktionierte Destillation, wobei

(1) das Rohgas durch einen Wärmetauscher geleitet, dabei auf -15°C bis -35°C abgekühlt,

(2) anschließend das von den kondensierbaren Produkten mindestens teilweise befreite Rohgas auf 0°C bis +40°C erwärmt, in einem Schraubenverdichter mit Öleinspritzung auf einen Druck von 0,6 MPa bis 1,5 MPa verdichtet, der Chlorwasserstoff durch einen Abscheider mit Filter vom Öl getrennt, das abgetrennte Öl in einem Wärmetauscher gekühlt, durch ein Filtervlies von Rückständen befreit und in den Verdichter zurückgeführt wird,

(3) anschließend der vom Öl abgetrennte, verdichtete Chlorwasserstoff in einer Destillationskolonne unter Druck fraktioniert und am Kopf der Kolonne der gereinigte Chlorwasserstoff abgezogen wird.

2. Verfahren nach Anspruch 1, dadurch gekennzeichnet, daß das Rohgas in der 1. Verfahrensstufe durch einen korrosionsbeständigen Wärmetauscher geleitet und dabei auf -25°C bis -35°C abgekühlt wird.

3. Verfahren nach Anspruch 1, dadurch gekennzeichnet, daß das von den kondensierbaren Produkten mindestens teilweise befreite Rohgas in der 2. Verfahrensstufe auf + 10°C bis + 25°C erwärmt, in einem einstufigen Schraubenverdichter mit Öleinspritzung auf einen Druck von 0,8 bis 1,2 MPa verdichtet, der Chlorwasserstoff durch einen Abscheider mit Keramikfilter vom Öl abgetrennt und das abgetrennte Öl durch ein Filtervlies aus polymerem organischem Material von gelartigen Rückständen befreit wird.

4. Verfahren nach Anspruch 3, dadurch gekennzeichnet, daß für die Ölschmierung des in der 2. Verfahrensstufe eingesetzten Schraubenverdichters additivfreie synthetische Kohlenwasserstoffe auf Polyolefinbasis verwendet werden.

5. Verfahren nach Anspruch 1, dadurch gekennzeichnet, daß der verdichtete Chlorwasserstoff in der 3. Verfahrensstufe in einer Destillationskolonne unter Druck fraktioniert wird und am Kolonnenkopf der gereinigte Chlorwasserstoff flüssig abgezogen wird.

## Claims

1. Process for the purification of crude gaseous hydrogen chloride which contains as impurities silanes containing chlorine and/or organic radicals, alkanols, water, chlorinated hydrocarbons, hydrocarbons, organic acids and derivatives thereof, by condensation, compression and fractional distillation, which comprises

(1) passing the crude gas through a heat exchanger, in which it is cooled to -15°C to -35°C,

(2) subsequently heating the crude gas which has been at least partially freed from condensable products to 0°C to +40°C, compressing it in a screw compressor with oil injection to a pressure of 0.6 to 1.5 MPa, separating off the hydrogen chloride from the oil through a separator with filter, cooling the oil which has been separated off in a heat exchanger, freeing it from residues through a filter web, and recycling it into the compressor,

(3) subsequently fractionating the compressed hydrogen chloride which has been separated off from the oil in a distillation column under pressure and discharging the purified hydrogen chloride at the top of the column.

2. Process according to Claim 1, characterised in that the crude gas in the first process stage is passed through a corrosion-resistant heat exchanger and thereby cooled to -25°C to -35°C.

3. Process according to Claim 1, characterised in that the crude gas which is at least partially freed from condensable products in the second process stage is heated to +10°C to +25°C, comressed in a single-stage screw compressor with oil injection to a pressure of 0.8 to 1.2 MPa, the hydrogen chloride is separated off from the oil through a separator with ceramic filter and the oil which has been separated off is freed from gel-like residues through a filter web made of polymeric organic material.

4. Process according to Claim 3, characterised in that additive-free polyolefin-based synthetic hydrocarbons are used for the oil lubrication of the screw compressor used in the second process stage.

5. Process according to Claim 1, characterised in that the compressed hydrogen chloride in the third process stage is fractionated under pressure in a distillation column and the purified hydrogen chloride is discharged at the top of the column as a liquid.

## Revendications

1. Procédé pour purifier du chlorure d'hydrogène gazeux brut qui contient, comme impuretés, des silanes, porteurs de radicaux chloro et/ou de radicaux organiques, des alcanols, de l'eau, des hydrocarbures chlorés, des hydrocarbures, des acides organiques et des dérivés de ceux-ci, par condensation, compression et distillation fractionnée, procédé selon lequel :

(1) on fait passer le gaz brut dans un échangeur thermique, où il est refroidi à une température de -15 à -35°C,

(2) on chauffe ensuite à une température de 0 à +40°C le gaz brut au moins partiellement débarrassé des produits condensables, on le comprime à une pression de 0,6 à 1,5 MPa dans un compresseur à vis avec injection d'huile, on sépare de l'huile le chlorure d'hydrogène au moyen d'un séparateur à filtre, on refroidit dans un échangeur thermique l'huile qui a été séparée, on en élimine les résidus à travers un non-tissé filtrant et on la renvoie au compresseur,

(3) après quoi on fractionne sous pression, dans une colonne de distillation, le chlorure d'hydrogène comprimé qui a été débarrassé de l'huile et on retire à la tête de la colonne le chlorure d'hydrogène purifié.

2. Procédé selon la revendication 1 caractérisé en ce que, dans la première étape du procédé, on fait passer le gaz brut à travers un échangeur thermique résistant à la corrosion, où on le refroidit à une température de -25 à -35°C .

3. Procédé selon la revendication 1 caractérisé en ce que le gaz brut débarrassé, au moins partiellement, des produits condensables, est chauffé à une température de +10 à +25°C dans la deuxième étape du procédé, il est comprimé à une pression de 0,8 à 1,2 MPa dans un compresseur à vis à un seul étage avec injection d'huile, le chlorure d'hydrogène est séparé de l'huile au moyen d'un séparateur avec filtre en céramique, et l'huile séparée est débarrassée de résidus gélatineux au moyen d'un non-tissé filtrant en une matière organique polymère.

4. Procédé selon la revendication 3 caractérisé en ce que, pour la lubrification par huile du compresseur à vis utilisé dans la deuxième étape du procédé, on utilise des hydrocarbures synthétiques à base de polyoléfines dépourvus d'additifs.

5. Procédé selon la revendication 1 caractérisé en ce que, dans la troisième étape du procédé, le chlorure d'hydrogène comprimé est fractionné sous pression dans une colonne de distillation, et le chlorure d'hydrogène purifié est retiré à l'état liquide à la tête de la colonne.